(19)

Europäisches
Patentamt
European
Patent Office
Office européen
des brevets

(11) **EP 2 039 514 B1**

(12) **EUROPÄISCHE PATENTSCHRIFT**

(45) Veröffentlichungstag und Bekanntmachung des
Hinweises auf die Patenterteilung:
**02.11.2011 Patentblatt 2011/44**

(51) Int Cl.:
***B41J 2/04*** *(2006.01)* ***B41J 2/205*** *(2006.01)*

(21) Anmeldenummer: **08016412.2**

(22) Anmeldetag: **18.09.2008**

(54) **Verfahren zum Reduzieren eines Durchschlageffektes bei Tintenstrahl-Eindrucken auf dünnen Bedruckstoffen**

Method for reducing a print-through effect for inkjet prints on thin printing materials

Procédé de réduction d'un effet de rupture dans des impressions à jet d'encre sur des matières d'impression fines

(84) Benannte Vertragsstaaten:
**AT BE BG CH CY CZ DE DK EE ES FI FR GB GR
HR HU IE IS IT LI LT LU LV MC MT NL NO PL PT
RO SE SI SK TR**

(30) Priorität: **20.09.2007 DE 102007044947**

(43) Veröffentlichungstag der Anmeldung:
**25.03.2009 Patentblatt 2009/13**

(73) Patentinhaber: **manroland AG
63012 Offenbach (DE)**

(72) Erfinder: **Schulmeister, Peter
85276 Pfaffenhofen (DE)**

(74) Vertreter: **Epp, Matthias Heinz et al
manroland AG
Intellectual Property (IP)
Alois-Senefelder-Allee 1
86153 Augsburg (DE)**

(56) Entgegenhaltungen:
**EP-A- 1 168 822 US-A- 5 371 531
US-A- 5 742 301**

**Beschreibung**

Die Erfindung betrifft ein Verfahren zum Reduzieren eines Durchschlageffektes bei Tintenstrahl-Eindrucken (Inkjet-Eindrucken) auf dünnen Bedruckstoffen, insbesondere auf Zeitungspapier.

Es sind heute bereits Anwendungen bekannt, bei denen mit Tintenstrahl-Druckverfahren (InkJet-Druckverfahren) auf sehr dünne, saugfähige Substrate bzw. Bedruckstoffe, wie z.B. Zeitungspapier, gedruckt wird. Ein großer Nachteil, der sich aber dabei ergibt, ist das sogenannte Durchschlagen bzw. der Durchschlageffekt. Dabei kann der Bedruckstoff die aufgetragene Tintenmenge nicht ausreichend aufnehmen und an der Bedruckstoffoberfläche verteilen, so dass die Tinte über z.B. Fasern des Bedruckstoffes durch den Bedruckstoff hindurchgeleitet und in bestimmtem Maße auf der Rückseite des Bedruckstoffes bzw. Druckproduktes sichtbar wird. Ein beidseitiges Drucken mit Tintenstrahl-Druckverfahren auf dünnen Bedruckstoffen, wie z.B. dünnen Papieren, wird dadurch erheblich erschwert bzw. hinsichtlich einer ausreichenden Druckqualität eines aufzudruckenden Druckbildes unmöglich.

Aus diesem Grunde werden bei einigen heutigen Anwendungen speziell beschichtete Bedruckstoffe bzw. Papiere verwendet, die verhindern sollen, dass die Tinte zu tief in den Bedruckstoff bzw. das Substrat eindringt. Diese Vorgehensweise führt aber letzten Endes zu hohen Produktionskosten bzw. Materialkosten, was insbesondere bei hohen Auflagen, wie sie bei der Produktion von Zeitungen üblich sind, nicht akzeptiert werden kann.

Das Dokument EP 1 168 822 A offenbart eine Methode zum bestimen eines Maximalwertes für den Durchschlageffekt.

Der Erfindung liegt die Aufgabe zugrunde, ein kostengünstiges Verfahren zum Reduzieren eines Durchschlageffektes bei Tintenstrahl-Eindrucken auf dünnen Bedruckstoffen, insbesondere Zeitungspapier, zu schaffen.

Dies wird mit einem Verfahren gemäß Anspruch 1 erreicht. Weiterbildungen der Erfindung sind in den abhängigen Ansprüchen beschrieben.

Gemäß der Erfindung weist ein Verfahren zum Reduzieren eines Durchschlageffektes bei Tintenstrahl-Eindrucken auf dünnen Bedruckstoffen, insbesondere Zeitungspapier, auf: Bestimmen einer Normal-Druckqualität, Bestimmen einer Normal-Tintenmenge, welche zum Tintenstrahldrucken eines bestimmten Druckbildes auf durchschlagfestem Bedruckstoff verwendet werden würde, auf Basis der Normal-Druckqualität, Bestimmen einer Minimal-Druckqualität für das zu druckende Druckbild, Bestimmen eines Maximalwertes für den Durchschlageffekt, Reduzieren der Normal-Tintenmenge auf eine reduzierte Tintenmenge, so dass das Druckbild mindestens die Minimal-Druckqualität aufweist und der Maximalwert des Durchschlageffektes nicht überschritten wird.

Mit dem erfindungsgemäßen Verfahren kann der als störend empfundene Durchschlageffekt auf ein Minimum reduziert bzw. sogar beseitigt werden.

Dadurch, dass erfindungsgemäß kein Spezialpapier mit durchschlaghemmender Beschichtung notwendig ist, können erhebliche Kosteneinsparungen hinsichtlich des Bedruckstoffes, wie beispielsweise Zeitungspapier, erzielt werden.

Ein weiterer Vorteil des erfindungsgemäßen Verfahrens besteht darin, dass durch die Reduzierung der Normal-Tintenmenge auf eine reduzierte Tintenmenge in erheblichem Maße Drucktinte eingespart werden kann und damit die Materialkosten für den Druckprozess weiter reduziert werden können.

Gemäß einer Weiterbildung der Erfindung wird die Normal-Tintenmenge durch ein Drucktropfenvolumen, eine geometrische Flächendeckung des Druckbildes auf dem Bedruckstoff und einen Grauwert des Druckbildes definiert, wobei das Reduzieren der Normal-Tintenmenge auf die reduzierte Tintenmenge durchgeführt wird durch Reduzieren von wenigstens einem von dem Drucktropfenvolumen, der geometrischen Flächendeckung und dem Grauwert.

Dies hat unter anderem den Vorteil, dass bei Reduzierung oder Beseitigung des Durchschlageffektes und Einsparung von Drucktinte gleichzeitig in einfacher Weise die vorbestimmte Minimal-Druckqualität des Druckbildes, d.h. eine für einen jeweiligen Druckauftrag z.B. vom Kunden vorgegebene Druckqualität, erreicht werden kann.

Gemäß einer weiteren Ausgestaltung der Erfindung wird zum Bestimmen der Normal-Tintenmenge ein der Normal-Qualität entsprechendes erstes Drucktropfenvolumen bestimmt und wird das Reduzieren der Normal-Tintenmenge auf die reduzierte Tintenmenge durchgeführt, indem das erste Drucktropfenvolumen auf ein geringeres zweites Drucktropfenvolumen reduziert wird.

Erfindungsgemäß wurde erkannt, dass sich, wenn die Drucktropfen bzw. Tintentropfen geometrisch als ideale Kugel angenommen werden, bei einer Reduzierung des Drucktropfenvolumens um einen bestimmten Prozentsatz ein Drucktropfendurchmesser in weitaus geringerem Maße reduziert. Somit wird bei gleichbleibender Druckauflösung eines Druckbildes, d.h. gleichbleibendem Abstand der Drucktropfen bzw. Tintentropfen voneinander, und Reduzierung des Drucktropfenvolumens eine nur geringe Reduzierung der geometrischen Flächendeckung des Druckbildes bewirkt.

Somit hat ein Nutzer des erfindungsgemäßen Verfahrens ausreichend Stellgröße, d.h. zu reduzierendes Drucktropfenvolumen, zur Hand, um einen vorhandenen Durchschlageffekt zu reduzieren.

Gegebenenfalls kann der Nutzer zusätzlich die Druckauflösung des Druckbildes erhöhen, um die geometrische Flächendeckung und damit die Druckbildqualität zu erhöhen.

Gemäß noch einer weiteren Ausgestaltung der Erfindung wird das erste Drucktropfenvolumen um etwa 50% bis etwa 75% reduziert.

Gemäß einer Weiterbildung der Erfindung wird das erste Drucktropfenvolumen mit weniger als 100pL bestimmt.

Gemäß einer alternativen Weiterbildung der Erfindung wird das erste Drucktropfenvolumen mit etwa 100pL bestimmt und wird das zweite Drucktropfenvolumen auf etwa 50pL bis etwa 25pL festgelegt.

Gemäß noch einer Weiterbildung der Erfindung wird eine zu der Normal-Druckqualität korrespondierende Druckauflösung für das Druckbild auf etwa 300dpi festgelegt.

Gemäß einer alternativen Weiterbildung der Erfindung wird eine zu der Normal-Druckqualität korrespondierende Druckauflösung für das Druckbild auf mehr als 300dpi festgelegt.

Gemäß einer anderen Ausgestaltung der Erfindung wird das Reduzieren der Normal-Tintenmenge auf die reduzierte Tintenmenge durchgeführt, indem die geometrische Flächendeckung des Druckbildes auf dem Bedruckstoff reduziert wird.

Mit dieser Ausgestaltung der Erfindung, welche eine Optimierung des Druckbildes dahingehend bedeutet, dass bei reduzierter Tintenmenge nur eine geringe Reduzierung der Druckbildqualität erfolgt, ist es ebenfalls in einfacher und kostengünstiger Weise möglich, einen Durchschlageffekt in ausreichendem Maße zu reduzieren bzw. zu vermeiden.

Gemäß einer Weiterbildung der Erfindung werden zum Bestimmen der Normal-Tintenmenge Tonwerte für unterschiedliche Bereiche des der Normal-Qualität entsprechenden Druckbildes definiert und wird die geometrische Flächendeckung reduziert durch Definieren einer Übertragungsfunktion oder Gradationskurve, so dass wenigstens ein Teil von Ausgangswerten der Übertragungsfunktion oder Gradationskurve kleiner als jeweils zugehörige Eingangswerte der Übertragungsfunktion oder Gradationskurve sind, und Verändern der definierten Tonwerte des Druckbildes, indem die Tonwerte als Eingangswerte für die Übertragungsfunktion oder Gradationskurve verwendet werden und die Ausgangswerte der Übertragungsfunktion oder Gradationskurve als neue Tonwerte für das Druckbild definiert werden.

D.h., bei dieser Ausbildung des erfindungsgemäßen Verfahrens wird die Normal-Tintenmenge derart auf die reduzierte Tintenmenge reduziert, dass Eingangstonwerte eines Druckbildes, d.h. Tonwerte zum Tintenstrahldrucken des Druckbildes auf durchschlagfestem Bedruckstoff, mittels der Übertragungsfunktion oder Gradationskurve auf Ausgangstonwerte, die zu der Minimal-Druckqualität korrespondieren, umgewandelt bzw. umgerechnet werden.

Gemäß noch einer Weiterbildung der Erfindung wird die Übertragungsfunktion oder Gradationskurve derart definiert, dass Tonwerte des Druckbildes im hellen Bereich unverändert bleiben und Tonwerte des Druckbildes nahe einem Vollton reduziert werden.

Gemäß einer weiteren Ausgestaltung der Erfindung wird zum Bestimmen der Normal-Tintenmenge ein Rasterbild für das Druckbild gebildet und wird die geometrische Flächendeckung reduziert durch Ausbilden einer Bit- oder Pixel-orientierten Maske, deren Rasterstruktur quantitativ gegenüber jener des Rasterbildes reduziert ist, und Abbilden des Rasterbildes durch die Bit- oder Pixel-orientierten Maske hindurch, so dass ein reduziertes Rasterbild gebildet wird.

Mit anderen Worten wird ein Druckbild, wie z.B. ein fertig geripptes Bitmap bzw. fertiges Rasterbild, mittels der Bit- oder Pixel-orientierten Maske, welche z.B. Hardware-basiert oder Software-basiert sein kann, durch eine logische Verknüpfung mit dieser Maske "ausgedünnt", so dass ein Durchschlageffekt reduziert bzw. vermieden und die Minimal-Druckqualität erreicht wird.

Gemäß einer Weiterbildung der Erfindung wird die Rasterstruktur der Bit- oder Pixel-orientierten Maske derart ausgebildet, dass sie quantitativ gegenüber jener des Rasterbildes um 50% reduziert ist.

Gemäß noch einer Ausgestaltung der Erfindung wird zum Bestimmen der Normal-Tintenmenge ein Rasterbild des Druckbildes definiert und wird die geometrische Flächendeckung reduziert, indem in zusammenhängenden Flächen des Rasterbildes eine bestimmte Anzahl von Bildpunkten entfernt werden, so dass ein reduziertes Rasterbild gebildet wird.

Diese Ausgestaltung der Erfindung ist insbesondere bei immer wiederkehrenden Druckbildern vorteilhaft, da ein entsprechend bildpunktreduziertes Druckbild, bei dem die Tintenmenge reduziert ist und das die Minimal-Druckqualität erfüllt, immer wieder zum Druck eingesetzt werden kann.

Gemäß einer Weiterbildung der Erfindung werden zum Tintenstrahldrucken von Texten bei dafür vorgesehenen Zeichensätzen bzw. Fonts eine bestimmte Anzahl von Bildpunkten entfernt, so dass jeweilige Konturen der Zeichen bzw. Buchstaben beibehalten werden.

Mit anderen Worten werden Bildpunkte so gezielt entfern, dass die Kontur der einzelnen Buchstaben beibehalten wird, wobei dort, wo sich der Durchschlageffekt besonders zeigt, nämlich in den großen, zusammenhängenden Flächen der Buchstaben, so gezielt Rasterpunkte entfernt werden, dass zwischen den Rasterpunkten entstehende Lücken nicht ins Auge fallen.

Gemäß einer weiteren Ausgestaltung der Erfindung wird das Reduzieren der Normal-Tintenmenge auf die reduzierte Tintenmenge durchgeführt, indem der Grauwert des Druckbildes reduziert wird.

Gemäß dieser Ausgestaltung der Erfindung ist es ebenfalls in einfacher Weise möglich, die aufgebrachte Tintenmenge zu reduzieren, so dass ein Durchschlageffekt reduziert bzw. vermieden wird, und dennoch die Minimal-Druckqualität zu erzielen.

Gemäß einer Weiterbildung der Erfindung werden zum Tintenstrahldrucken von Texten Zeichensätze mit einem Grauwert, der kleiner als 100% ist, definiert.

Mit anderen Worten werden Text-Zeichensätze bzw. Text-Fonts, welche normalerweise in Vollfarbtönen vordefiniert werden, erfindungsgemäß mit einem Grauwert von kleiner 100% definiert, so dass sich die geometrische Flächendeckung des jeweiligen Druckbildes, d.h. der einzelnen Buchstaben, reduziert.

Im Folgenden wird die Erfindung anhand bevorzugter Ausführungsformen und unter Bezugnahme auf die beigefügten Figuren detaillierter beschrieben.

Fig.1A   zeigt schematisch das Reduzieren des Drucktropfenvolumens von Drucktropfen für ein Druckbild gemäß einer ersten Ausführungsform der Erfindung.

Fig.1B   zeigt schematisch das Erhöhen der Druckauflösung des Druckbildes gemäß der ersten Ausführungsform der Erfindung

Fig.2   zeigt ein Diagramm, in dem der mathematische Zusammenhang von Drucktropfendurchmesser und Drucktropfenvolumen dargestellt ist.

Fig.3   zeigt eine Ansicht einer Übertragungsfunktion bzw. Gradationskurve gemäß einer zweiten Ausführungsform der Erfindung.

Fig.4   zeigt schematisch in perspektivischer Darstellung das Reduzieren der geometrischen Flächendeckung eines Druckbildes mittels einer Bit- oder Pixel-orientierten Maske, gemäß einer dritten Ausführungsform der Erfindung.

Fig.5   zeigt schematisch in einer Draufsicht das Reduzieren der geometrischen Flächendeckung eines Druckbildes mittels einer Bit- oder Pixel-orientierten Maske, gemäß der dritten Ausführungsform der Erfindung.

Fig.6   zeigt schematisch das Reduzieren der geometrische Flächendeckung eines Druckbildes durch Entfernen einer bestimmten Anzahl von Bildpunkten.

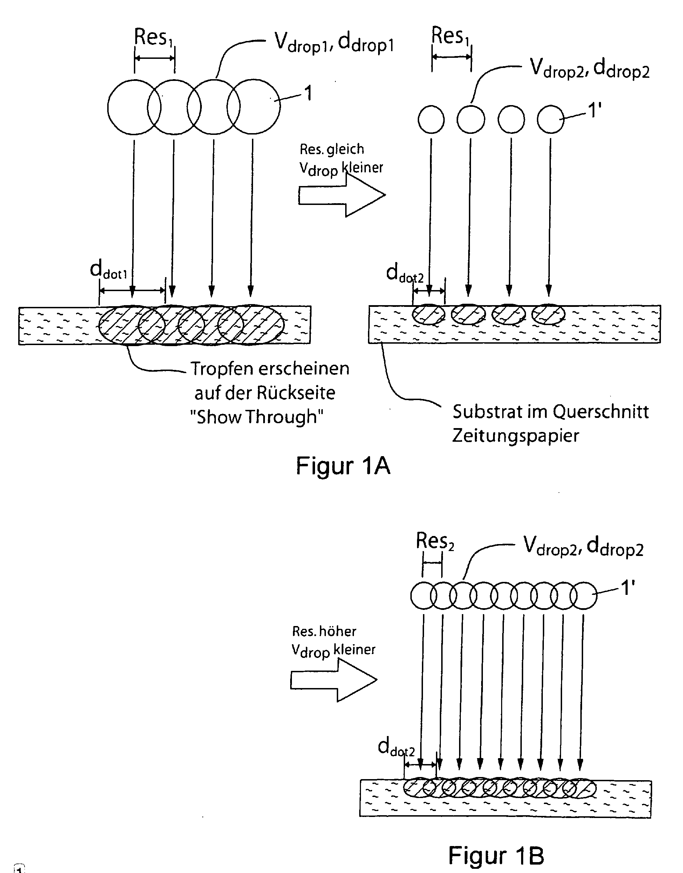

Fig.1A zeigt schematisch das Reduzieren des Drucktropfenvolumens von Drucktropfen 1 für ein bestimmtes Druckbild auf dünnem Bedruckstoff, gemäß einer ersten Ausführungsform der Erfindung. Gemäß dieser Ausführungsform ist der dünne Bedruckstoff als Zeitungspapier ausgebildet.

Gemäß der Erfindung wird eine Tintenmenge, welche zum Tintenstrahldrucken verwendet wird, durch ein Drucktropfenvolumen $V_{drop}$, eine geometrische Flächendeckung des Druckbildes auf dem Zeitungspapier und einen Grauwert des Druckbildes definiert.

Das Drucktropfenvolumen $V_{drop}$ wird erfindungsgemäß als dem Volumen einer idealen Kugel annähernd gleichkommend betrachtet, wobei für eine Kugel gilt:

$$V = \frac{4}{3} r^3 \pi$$

und
wobei V dem Kugelvolumen, r dem Radius der Kugel und $\pi$ der Kreiszahl ($\approx 3{,}14$) entspricht.

Demgemäß kann das Drucktropfenvolumen $V_{drop}$ nach der folgenden Vorschrift definiert werden:

$$V_{drop} = \frac{1}{6} d_{drop}{}^3 \pi,$$

wobei $d_{drop}$ dem Drucktropfendurchmesser entspricht. Mit anderen Worten ist das Drucktropfenvolumen $V_{drop}$ näherungsweise proportional der 3. Potenz des Drucktropfendurchmessers $d_{drop}$.

Nach dem Drucktropfendurchmesser $d_{drop}$ aufgelöst ergibt sich somit die folgende Vorschrift:

$$d_{drop} = \sqrt[3]{\frac{6}{\pi} V_{drop}}$$

Fig.1A zeigt allgemein übliche Größenverhältnisse, wobei ein erstes Drucktropfenvolumen $V_{drop1}$ einer Normal-Tintenmenge, wie sie zum Tintenstrahldrucken eines Druckbildes auf relativ dickem Papier bzw. durchschlagfestem Papier verwendet werden würde, gemäß dieser Ausführungsform ca. 100pL (Pikoliter) bis mehrere 100pL betragen kann.

Ein Abstand der Drucktropfen 1 wird als Druckauflösung oder Resolution Res bezeichnet, wobei für die Druckauflösung Res heutzutage in etwa bis zu 300dpi (dots per inch - Punkte pro Zoll) üblich sind.

Das Drucktropfenvolumen $V_{drop}$ bzw. der Drucktropfendurchmesser $d_{drop}$, beeinflusst neben der Saugfähigkeit des Substrates bzw. Zeitungspapiers maßgeblich einen Druckpunktdurchmesser $d_{dot}$ auf dem Zeitungspapier. Da die Drucktinte beim Drucken auf das Zeitungspapier in der Regel etwas auseinanderfließt, sind ein Druckpunktdurchmesser $d_{dot1}$ gemäß der Normal-Tintenmenge und ein Druckpunktdurchmesser $d_{dot2}$ gemäß einer reduzierten Tintenmenge in Fig1A (wie auch in Fig1 B) symbolisch etwas größer als der jeweilige Drucktropfendurchmesser $d_{drop1}$ bzw. $d_{drop2}$ dargestellt. Ein Bereich der Verteilung der Drucktinte im Zeitungspapier bzw. Substrat ist schraffiert dargestellt.

Wie in Fig.1A in der linken Darstellung zu sehen, erscheint die Drucktinte auf der Rückseite des Zeitungspapiers bzw. Substrates bzw. generiert dort zumindest eine nicht mehr zu vernachlässigende, deutlich messbare optische Dichte. Dieser Effekt, der als Durchschlageffekt bezeichnet wird, wird auf Druckprodukten als sehr störend empfunden, wodurch ein beidseitiges Bedrucken des Zeitungspapiers aus qualitativer Sicht praktisch unmöglich ist.

Nun wird anhand von Fig.1A das Reduzieren der Normal-Tintenmenge auf eine reduzierte Tintenmenge beschrieben.

Zuerst wird eine Normal-Druckqualität bestimmt. D.h., ein Nutzer des erfindungsgemäßen Verfahrens, wie z.B. ein Drucker, legt anhand von z.B. Kundenvorgaben eine beispielsweise visuell zu beurteilende Normal-Druckqualität fest, wobei der Nutzer ein erstes Drucktropfenvolumen $V_{drop1}$, das zum Tintenstrahldrucken des Druckbildes auf durchschlagfestem Papier verwendet werden würde, und eine erste Druckauflösung $Res_1$ für das Druckbild festlegt.

Das erste Drucktropfenvolumen $V_{drop1}$ definiert sich nach folgender Vorschrift:

$$V_{drop1} = \frac{1}{6} d_{drop1}{}^3 \pi$$

Somit lässt sich ein erster Drucktropfendurchmesser $d_{drop1}$ nach folgender Vorschrift herleiten:

$$d_{drop1} = \sqrt[3]{\frac{6}{\pi} V_{drop1}}$$

Als Nächstes wird eine Minimal-Druckqualität für das zu druckende Druckbild bestimmt. D.h., ein Nutzer des erfindungsgemäßen Verfahrens, wie z.B. ein Drucker, legt anhand von z.B. Kundenvorgaben eine beispielsweise visuell zu beurteilende Druckqualität fest, welche gerade noch akzeptabel ist.

Ferner bestimmt der Nutzer einen Maximalwert für den Durchschlageffekt. D.h., der Nutzer legt anhand von z.B. Kundenvorgaben einen beispielsweise visuell zu beurteilenden maximalen Grad fest, mit dem ein auf eine Seite (Vorderseite) des Substrates bzw. Zeitungspapiers aufgedrucktes Druckbild auf der anderen Seite (Rückseite) des Substrates bzw. Zeitungspapiers durchscheinen bzw. durchschlagen ("Show Through") darf.

Als Nächstes wird die Normal-Tintenmenge auf eine reduzierte Tintenmenge reduziert, indem das erste Drucktropfenvolumen $V_{drop1}$ reduziert wird, so dass das Druckbild mindestens die Minimal-Druckqualität aufweist und der Maximalwert des Durchschlageffektes nicht überschritten wird.

Gemäß der ersten Ausführungsform der Erfindung wird das erste Drucktropfenvolumen $V_{drop1}$ um etwa 50% bis etwa 75% reduziert, so dass sich ein reduziertes zweites Drucktropfenvolumen $V_{drop2}$ (für die reduzierte Tintenmenge) ergibt, welches etwa 50% bis etwa 25% des ersten Drucktropfenvolumen $V_{drop1}$ beträgt.

Mit anderen Worten werden erfindungsgemäß kleinere Drucktropfen 1' verwendet, wodurch sich die aufgebrachte Tintenmenge reduziert, eine Eindringtiefe der Drucktinte geringer wird und der Durchschlageffekt reduziert bzw. minimiert wird.

Die geometrische Flächendeckung des Druckbildes auf dem Zeitungspapier wird dadurch zwar ebenfalls reduziert, aber nicht in gleichem Maße wie das erste Drucktropfenvolumen $V_{drop1}$.

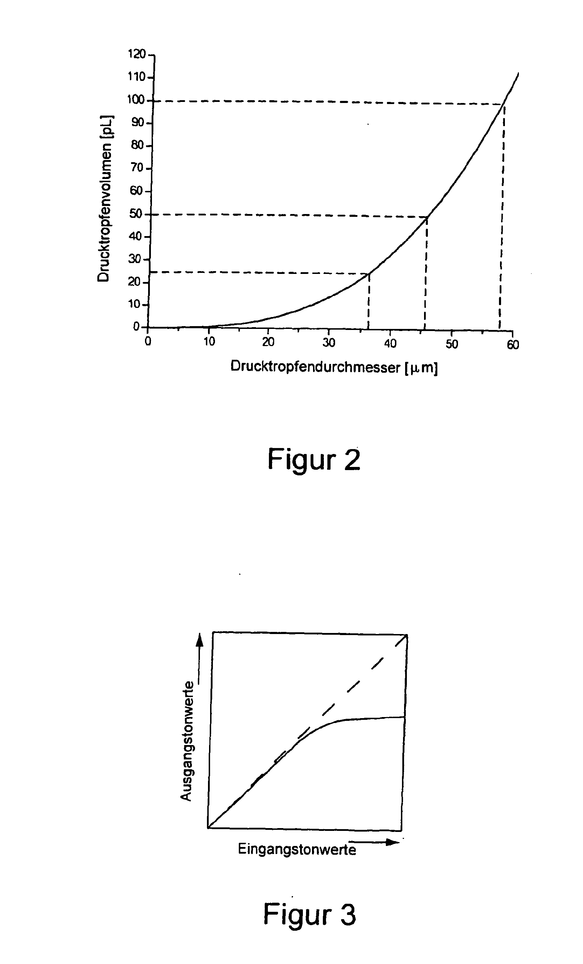

Um diesen Zusammenhang zu verdeutlichen, wird zusätzlich auf Fig.2 Bezug genommen, in der der mathematische Zusammenhang zwischen Drucktropfendurchmesser $d_{drop}$ und Drucktropfenvolumen $V_{drop}$ (unter Annahme einer idealen Kugelform des Drucktropfens 1, 1') mittels eines Diagramms dargestellt ist.

Wie in Fig.2 gezeigt, ergibt sich bei einem Drucktropfenvolumen $V_{drop}$ von beispielsweise $V_{drop}$=100pL ein theoretischer Wert für den Drucktropfendurchmesser von $d_{drop}$=58μm. Bei einer Reduzierung des Drucktropfenvolumens um die Hälfte auf $V_{drop}$=50pL beträgt der Drucktropfendurchmesser immer noch 46μm. Das bedeutet, dass, obwohl das Drucktropfenvolumen nur noch halb so groß ist, wodurch die Eindringtiefe also ebenfalls nur noch etwa halb so tief ist, sich der für den Druck wichtige Drucktropfendurchmesser $d_{drop}$ bzw. der Druckpunktdurchmesser $d_{dot}$ nur um etwa 20% verringert. Bei einer Reduzierung des Drucktropfenvolumens $V_{drop}$ auf $V_{drop}$=25pL, d.h. auf ein Viertel des ursprünglichen Drucktropfenvolumens von $V_{drop}$=100pL, beträgt der Drucktropfendurchmesser $d_{drop}$ immer noch ca. 36μm.

Wie in Fig.1B gezeigt, kann der Nutzer, wenn nach dem Reduzieren der Normal-Tintenmenge auf die reduzierte Tintenmenge, eine Verbesserung der Druckqualität gewünscht ist, die erste Druckauflösung $Res_1$ auf eine zweite Druckauflösung $Res_2$ erhöhen.

Dadurch wird erreicht, dass die Fläche an der zu bedruckenden Seite des Substrates bzw. Zeitungspapiers im Vergleich zu der in Fig.1A links dargestellten Normal-Druckqualität geometrisch etwa gleich abgedeckt wird, wodurch die optische Dichte bzw. geometrische Flächendeckung des Druckbildes auf der Vorderseite in etwa mit jener bei Normal-Druckqualität vergleichbar ist. Da die insgesamt aufgetragene Tintenmenge aber wesentlich geringer ist und die Drucktropfen 1' wesentlich weniger tief in das Substrat eindringen, ist der Effekt des Durchschlagens wesentlich geringer ausgeprägt, d.h. die durch das Druckbild auf der Rückseite des Substrats verursachte messbare optische Dichte ist wesentlich geringer bzw. kann vollständig vermieden werden. Damit wird erfindungsgemäß ein beidseitiges Bedrucken von dünnen Substraten, wie Zeitungspapier, aus qualitativer Sicht möglich.

Zusammenfassend werden gemäß der ersten Ausführungsform der Erfindung u.a. folgende Schritte durchgeführt:

1. Verkleinern des Drucktropfenvolumens $V_{drop}$, bis der Durchschlageffekt auf einem bestimmten Substrat entweder beseitigt ist oder aber nicht mehr als störend empfunden wird.

2. Erhöhen der Druckauflösung Res, bis die Bedruckstofffläche wieder komplett abgedeckt werden kann oder aber ein akzeptierter Flächendeckungsgrad erreicht wird.

Nun wird unter Bezugnahme auf Fig.3 eine zweite Ausführungsform des erfindungsgemäßen Verfahrens beschrieben.

Zuerst wird wieder eine Normal-Druckqualität bestimmt. D.h., der Nutzer des erfindungsgemäßen Verfahrens legt anhand von z.B. Kundenvorgaben eine beispielsweise visuell zu beurteilende Normal-Druckqualität fest.

Dann wird wieder auf Basis der Normal-Druckqualität eine Normal-Tintenmenge, welche zum Tintenstrahldrucken eines bestimmten Druckbildes auf durchschlagfestem Bedruckstoff verwendet werden würde, bestimmt. Zu diesem Zweck werden Tonwerte für unterschiedliche Bereiche des der Normal-Qualität entsprechenden Druckbildes definiert.

Als Nächstes wird eine Minimal-Druckqualität für das zu druckende Druckbild bestimmt. D.h., der Nutzer legt anhand von z.B. Kundenvorgaben eine beispielsweise visuell zu beurteilende Druckqualität fest, welche gerade noch akzeptabel ist.

Ferner bestimmt der Nutzer einen Maximalwert für den Durchschlageffekt. D.h., der Nutzer legt anhand von z.B. Kundenvorgaben einen beispielsweise visuell zu beurteilenden maximalen Grad fest, mit dem ein auf eine Seite (Vorderseite) des Substrates bzw. Zeitungspapiers aufgedrucktes Druckbild auf der anderen Seite (Rückseite) des Substrates bzw. Zeitungspapiers durchscheinen bzw. durchschlagen darf.

Als Nächstes wird die Normal-Tintenmenge auf eine reduzierte Tintenmenge reduziert, indem die geometrische Flächendeckung des Druckbildes reduziert wird. Gemäß der zweiten Ausführungsform der Erfindung geschieht dies wie nachfolgend erläutert.

Zuerst wird eine Übertragungsfunktion oder Gradationskurve wie in Fig.3 gezeigt so definiert, dass wenigstens ein Teil von Ausgangswerten der Übertragungsfunktion oder Gradationskurve kleiner als jeweils zugehörige Eingangswerte der Übertragungsfunktion oder Gradationskurve sind. D.h., die Übertragungsfunktion oder Gradationskurve kann so definiert werden, dass beispielsweise Eingangstonwerte des der Normal-Qualität entsprechenden Druckbildes im hellen Bereich unangetastet bzw. unverändert bleiben, wohingegen Eingangstonwerte des der Normal-Qualität entsprechenden Druckbildes nahe dem Vollton reduziert, also aufgehellt werden, so dass ein entstehendes reduziertes Druckbild mindestens die Minimal-Druckqualität erfüllt und der Maximalwert des Durchschlageffektes nicht überschritten wird. Andere Konfigurationen sind natürlich möglich.

Als Nächstes werden die definierten Tonwerte des der Normal-Qualität entsprechenden Druckbildes verändert, indem die Tonwerte als Eingangswerte für die Übertragungsfunktion oder Gradationskurve verwendet werden und die Ausgangswerte der Übertragungsfunktion oder Gradationskurve als neue Tonwerte für ein Druckbild mit reduzierter Tintenmenge verwendet werden.

Dadurch reduziert sich, wenn z.B. die Eingangstonwerte des Druckbildes im hellen Bereich unverändert bleiben, wohingegen die Eingangstonwerte des Druckbildes nahe dem Vollton reduziert werden, im gerasterten Bild die aufgetragene Tintenmenge pro Flächeneinheit in den dunklen Tönen, wodurch sich die Drucktinte an der Substratoberfläche ausbreiten kann, wobei die Eindringtiefe der Drucktinte in das Substrat geringer als bei Normal-Tintenmenge ist und der Durchschlageffekt reduziert bzw. vermieden wird.

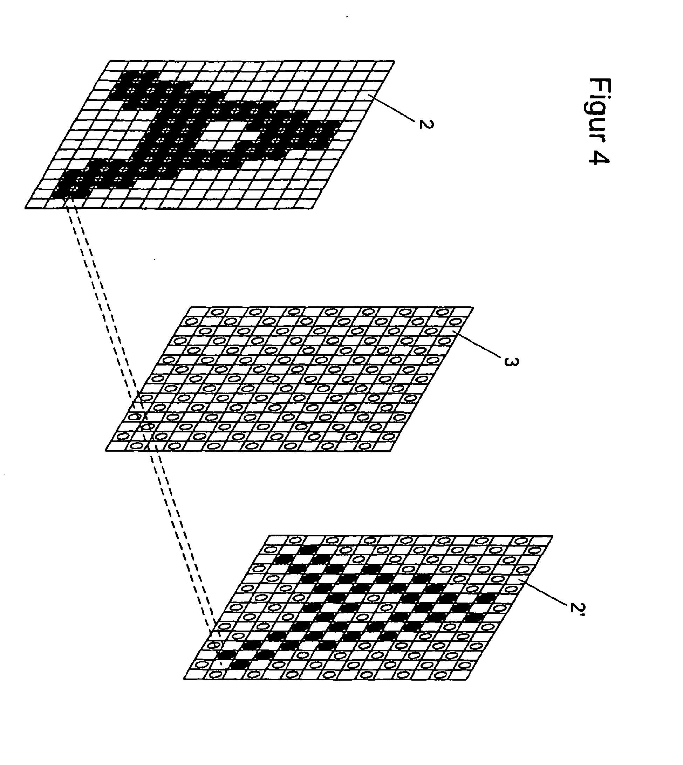

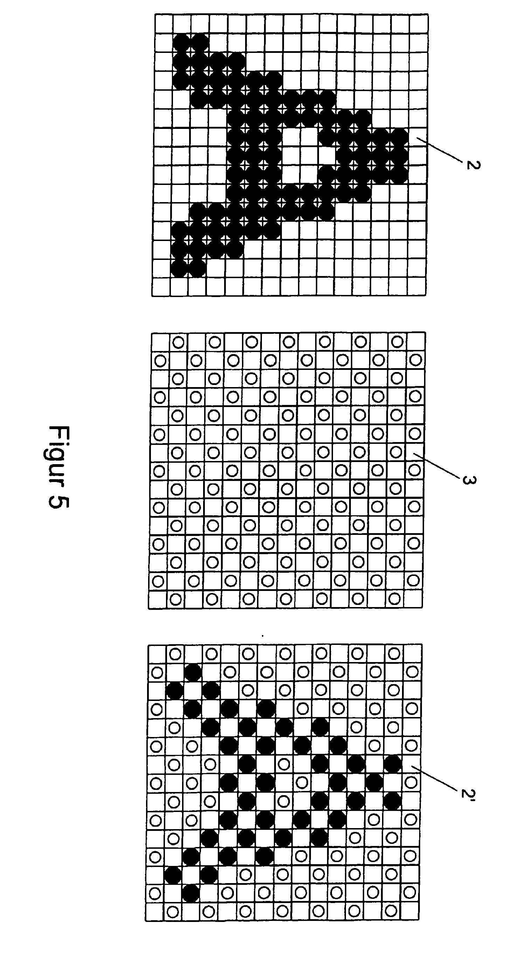

Nun wird unter Bezugnahme auf Fig.4 und Fig. 5 eine dritte Ausführungsform des erfindungsgemäßen Verfahrens beschrieben.

Zuerst wird wieder eine Normal-Druckqualität bestimmt. D.h., der Nutzer des erfindungsgemäßen Verfahrens legt anhand von z.B. Kundenvorgaben eine beispielsweise visuell zu beurteilende Normal-Druckqualität für ein bestimmtes Druckbild fest. Gemäß Fig.4 und Fig. 5 ist das Druckbild beispielhaft als Großbuchstabe "A" definiert.

Dann wird wieder auf Basis der Normal-Druckqualität eine Normal-Tintenmenge, welche zum Tintenstrahldrucken des Druckbildes auf durchschlagfestem Bedruckstoff verwendet werden würde, bestimmt. Zu diesem Zweck wird das der Normal-Druckqualität entsprechende Druckbild mittels z.B. eines RIP (Raster Image Processor - Rasterbildprozessor), welcher in Hardware und/oder Software realisiert sein kann, in ein der Normal-Druckqualität entsprechendes Rasterbild 2 umgewandelt bzw. umgerechnet. Aus dem fertig gerippten Rasterbild 2 ergibt sich die Normal-Tintenmenge.

Als Nächstes wird eine Minimal-Druckqualität für das zu druckende Druckbild bestimmt. D.h., der Nutzer legt anhand von z.B. Kundenvorgaben eine beispielsweise visuell zu beurteilende Druckqualität fest, welche gerade noch akzeptabel ist.

Ferner bestimmt der Nutzer einen Maximalwert für den Durchschlageffekt. D.h., der Nutzer legt anhand von z.B. Kundenvorgaben einen beispielsweise visuell zu beurteilenden maximalen Grad fest, mit dem ein auf eine Seite (Vorderseite) des Substrates bzw. Zeitungspapiers aufgedrucktes Druckbild auf der anderen Seite (Rückseite) des Substrates bzw. Zeitungspapiers durchscheinen bzw. durchschlagen darf.

Als Nächstes wird die Normal-Tintenmenge auf eine reduzierte Tintenmenge reduziert, indem die geometrische Flächendeckung des Druckbildes reduziert wird. Gemäß der dritten Ausführungsform der Erfindung geschieht dies wie nachfolgend erläutert.

Zuerst wird eine Bit- oder Pixel-orientierten Maske 3, deren Rasterstruktur quantitativ gegenüber jener des Rasterbildes 2 reduziert ist, definiert.

Danach wird das Rasterbild 2 durch die Bit- oder Pixel-orientierte Maske 3 hindurch abgebildet, so dass ein reduziertes Rasterbild 2' definiert wird, wobei das reduzierte Rasterbild 2' eine reduzierte Tintenmenge für das Druckbild definiert.

Mit anderen Worten wird unter Verwendung der Hardware-basierten oder in Software realisierten Bit- oder Pixelorientierten Maske 3 das fertig gerippte Bitmap bzw. Rasterbild 3 durch eine logische Verknüpfung mit dieser Maske 3 "ausgedünnt", so dass das reduzierte Rasterbild 2' mindestens die Minimal-Druckqualität erfüllt und der Maximalwert des Durchschlageffektes nicht überschritten wird.

In Fig.4 und Fig.5 ist die Rasterstruktur der Bit- oder Pixel-orientierten Maske 3 exemplarisch derart ausgebildet, dass sie quantitativ gegenüber jener des Rasterbildes 2 um 50% reduziert ist.

Mit anderen Worten zeigen Fig.4 und Fig.5 exemplarisch eine regelmäßige "Ausdünnung" des Rasterbildes 2, so dass das reduzierte Rasterbild 2', welches mittels der Maske 3 pixelweise verrundet wurde, nur noch 50% der ursprünglichen geometrischen Flächendeckung des Rasterbildes 2 aufweist. Die beim Drucken aufgetragene Tintenmenge reduziert sich entsprechend, wodurch der Durchschlageffekt reduziert bzw. vermieden wird. Genauso wie das gezeigte Beispiel können andere regelmäßige oder statistisch verteilte Bitmap-Masken 3 mit festgelegten "Ausdünnraten" verwendet werden.

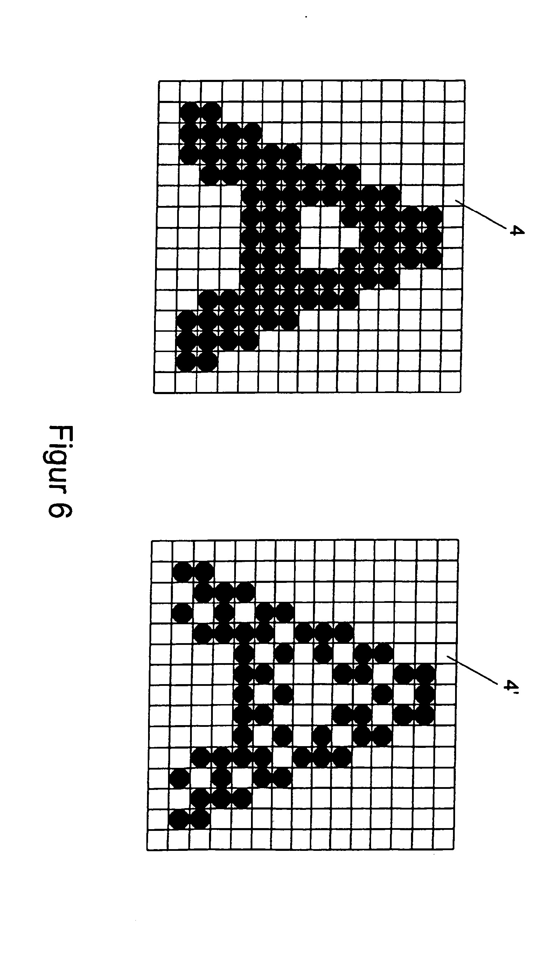

Nun wird unter Bezugnahme auf Fig.6 eine vierte Ausführungsform des erfindungsgemäßen Verfahrens beschrieben.

Zuerst wird wieder eine Normal-Druckqualität bestimmt. D.h., der Nutzer des erfindungsgemäßen Verfahrens legt anhand von z.B. Kundenvorgaben eine beispielsweise visuell zu beurteilende Normal-Druckqualität für ein bestimmtes Druckbild fest. Gemäß Fig.6 ist das Druckbild beispielhaft als Großbuchstabe "A" definiert.

Dann wird wieder auf Basis der Normal-Druckqualität eine Normal-Tintenmenge, welche zum Tintenstrahldrucken des Druckbildes auf durchschlagfestem Bedruckstoff verwendet werden würde, bestimmt. Zu diesem Zweck wird das der Normal-Druckqualität entsprechende Druckbild in ein der Normal-Druckqualität entsprechendes Rasterbild 4 umgewandelt bzw. einem normal gerasterten Font zugeordnet. Aus dem Rasterbild 4 ergibt sich die Normal-Tintenmenge.

Als Nächstes wird eine Minimal-Druckqualität für das zu druckende Druckbild bestimmt. D.h., der Nutzer legt anhand von z.B. Kundenvorgaben eine beispielsweise visuell zu beurteilende Druckqualität fest, welche gerade noch akzeptabel ist.

Ferner bestimmt der Nutzer einen Maximalwert für den Durchschlageffekt. D.h., der Nutzer legt anhand von z.B. Kundenvorgaben einen beispielsweise visuell zu beurteilenden maximalen Grad fest, mit dem ein auf eine Seite (Vorderseite) des Substrates bzw. Zeitungspapiers aufgedrucktes Druckbild auf der anderen Seite (Rückseite) des Substrates bzw. Zeitungspapiers durchscheinen bzw. durchschlagen darf.

Als Nächstes wird die Normal-Tintenmenge auf eine reduzierte Tintenmenge reduziert, indem die geometrische Flächendeckung des Druckbildes reduziert wird. Gemäß der vierten Ausführungsform der Erfindung geschieht dies wie nachfolgend erläutert.

Aus großen, zusammenhängenden Flächen des Rasterbildes 4 werden eine bestimmte Anzahl von Bildpunkten entfernt, so dass ein entstehendes pixelreduziertes Rasterbild 4' mindestens die Minimal-Druckqualität erfüllt und der Maximalwert des Durchschlageffektes nicht überschritten wird.

Gemäß dem in Fig.6 gezeigten Beispiel werden aus zum Tintenstrahldrucken von Texten vorgesehenen Zeichensätzen eine bestimmte Anzahl von Bildpunkten entfernt, so dass jeweilige Konturen der Zeichen beibehalten werden.

Mit anderen Worten können gemäß der vierten Ausführungsform der Erfindung zum Reduzieren des Durchschlageffektes speziell optimierte, punktreduzierte Fonts bzw. Zeichensätze verwendet werden. Der Vorteil besteht hier darin, dass die Kontur der einzelnen Buchstaben beibehalten werden kann, wohingegen dort, wo ein Durchschlagen besonders störend wirkt bzw. stark ausgeprägt sein kann, nämlich in den großen, zusammenhängenden Flächen, gezielt Rasterpunkte entfernt werden. Fig.6 zeigt die Rasterpunkte nur symbolisch. In der Realität sind die auf dem Substrat bzw. Zeitungspapier wiedergegebenen Tintenpunkte deutlich größer im Durchmesser, so dass die Rasterpunktlücken nicht ins Auge fallen.

Nun wird ein fünfte Ausführungsform des erfindungsgemäßen Verfahrens beschrieben.

Zuerst wird wieder eine Normal-Druckqualität bestimmt. D.h., der Nutzer des erfindungsgemäßen Verfahrens legt anhand von z.B. Kundenvorgaben eine beispielsweise visuell zu beurteilende Normal-Druckqualität für ein bestimmtes Druckbild fest. Gemäß der fünften Ausführungsform der Erfindung ist das Druckbild beispielhaft als Buchstabe eines Zeichensatzes bzw. Fonts definiert.

Dann wird wieder auf Basis der Normal-Druckqualität eine Normal-Tintenmenge, welche zum Tintenstrahldrucken des Druckbildes auf durchschlagfestem Bedruckstoff verwendet werden würde, bestimmt. Zu diesem Zweck wird das der Normal-Druckqualität entsprechende Druckbild einem der Normal-Druckqualität entsprechenden Font mit einem Grauwert von 100% zugeordnet, woraus sich die Normal-Tintenmenge ergibt.

Als Nächstes wird eine Minimal-Druckqualität für das zu druckende Druckbild bestimmt. D.h., der Nutzer legt anhand von z.B. Kundenvorgaben eine beispielsweise visuell zu beurteilende Druckqualität fest, welche gerade noch akzeptabel ist.

Ferner bestimmt der Nutzer einen Maximalwert für den Durchschlageffekt. D.h., der Nutzer legt anhand von z.B. Kundenvorgaben einen beispielsweise visuell zu beurteilenden maximalen Grad fest, mit dem ein auf eine Seite (Vorderseite) des Substrates bzw. Zeitungspapiers aufgedrucktes Druckbild auf der anderen Seite (Rückseite) des Substrates bzw. Zeitungspapiers durchscheinen bzw. durchschlagen darf.

Als Nächstes wird die Normal-Tintenmenge auf eine reduzierte Tintenmenge reduziert, indem die geometrische Flächendeckung des Druckbildes reduziert wird.

Gemäß der fünften Ausführungsform der Erfindung geschieht das Reduzieren der Normal-Tintenmenge auf die reduzierte Tintenmenge dadurch, dass der Grauwert des Druckbildes reduziert wird, so dass ein entstehendes reduziertes Druckbild mindestens die Minimal-Druckqualität erfüllt und der Maximalwert des Durchschlageffektes nicht überschritten wird. Im beschriebenen Beispiel wird demnach ein Zeichensatz bzw. Font mit einem Grauwert, der kleiner als 100% ist, definiert. Mit anderen Worten werden die Fonts zum Reduzieren des Durchschlageffektes nicht in der Volltonfarbe angelegt, sondern besitzen einen definierten Grauwert, der kleiner als 100% ist.

Dadurch werden die Fonts bei einem RIP-Vorgang automatisch, z.B. nach einem im RIP hinterlegten Raster- oder Dithering-Schema aufgerastert und die geometrische Flächendeckung des Druckbildes reduziert sich dementsprechend.

Bezugszeichenliste

| 1 | normaler Drucktropfen |
| 1' | verkleinerter Drucktropfen |
| 2 | normales Rasterbild |
| 2' | reduziertes Rasterbild |
| 3 | Bit- oder Pixel-orientierte Maske |
| 4 | normales Rasterbild |
| 4' | reduziertes Rasterbild |

| $V_{drop}$ | Drucktropfenvolumen |
| $V_{drop1}$ | erstes Drucktropfenvolumen |
| $V_{drop2}$ | zweites Drucktropfenvolumen |
| $d_{drop1}$ | erster Drucktropfendurchmesser |
| $d_{drop2}$ | zweiter Drucktropfendurchmesser |
| $d_{dot1}$ | Druckpunktdurchmesser gemäß Normal-Tintenmenge |
| $d_{dot2}$ | Druckpunktdurchmesser gemäß reduzierter Tintenmenge |
| $Res_1$ | erste Druckauflösung |
| $Res_2$ | zweite Druckauflösung |

**Patentansprüche**

1. Verfahren zum Reduzieren eines Durchschlageffektes bei Tintenstrahl-Eindrucken auf dünnen Bedruckstoffen, insbesondere Zeitungspapier, aufweisend:

    Bestimmen einer Normal-Druckqualität, Bestimmen einer Normal-Tintenmenge, welche zum Tintenstrahldrucken eines bestimmten Druckbildes auf durchschlagfestem Bedruckstoff verwendet werden würde, auf Basis der Normal-Druckqualität, Bestimmen einer Minimal-Druckqualität für das zu druckende Druckbild, Bestimmen eines Maximalwertes für den Durchschlageffekt,
    Reduzieren der Normal-Tintenmenge auf eine reduzierte Tintenmenge, so dass das Druckbild mindestens die Minimal-Druckqualität aufweist und der Maximalwert des Durchschlageffektes nicht überschritten wird.

2. Verfahren gemäß Anspruch 1, wobei die Normal-Tintenmenge durch ein Drucktropfenvolumen ($V_{drop}$), eine geometrische Flächendeckung des Druckbildes auf dem Bedruckstoff und einen Grauwert des Druckbildes definiert wird, und wobei das Reduzieren der Normal-Tintenmenge auf die reduzierte Tintenmenge durchgeführt wird durch Reduzieren von wenigstens einem von dem Drucktropfenvolumen ($V_{drop}$), der geometrischen Flächendeckkung und dem Grauwert.

3. Verfahren gemäß Anspruch 2, wobei zum Bestimmen der Normal-Tintenmenge ein der Normal-Qualität entsprechendes erstes Drucktropfenvolumen ($V_{drop1}$) bestimmt wird, und wobei das Reduzieren der Normal-Tintenmenge auf die reduzierte Tintenmenge durchgeführt wird,
    indem das erste Drucktropfenvolumen ($V_{drop1}$) auf ein geringeres zweites Drucktropfenvolumen ($V_{drop2}$) reduziert wird.

4. Verfahren gemäß Anspruch 3, wobei das erste Drucktropfenvolumen ($V_{drop1}$) um 50% bis 75% reduziert wird.

5. Verfahren gemäß Anspruch 3 oder 4, wobei das erste Drucktropfenvolumen ($V_{droP1}$) mit weniger als 100pL bestimmt wird.

6. Verfahren gemäß Anspruch 3 oder 4, wobei das erste Drucktropfenvolumen ($V_{drop1}$) mit etwa 100pL bestimmt wird und das zweite Drucktropfenvolumen ($V_{drop2}$) auf etwa 50pL bis etwa 25pL festgelegt wird.

7. Verfahren gemäß einem der Ansprüche 3 bis 6, wobei eine zu der Normal-Druckqualität korrespondie-

rende Druckauflösung ($Res_1$) für das Druckbild auf etwa 300dpi festgelegt wird.

8. Verfahren gemäß einem der Ansprüche 3 bis 6, wobei eine zu der Normal-Druckqualität korrespondierende Druckauflösung ($Res_1$) für das Druckbild auf mehr als 300dpi festgelegt wird.

9. Verfahren gemäß Anspruch 2, wobei das Reduzieren der Normal-Tintenmenge auf die reduzierte Tintenmenge durchgeführt wird, indem die geometrische Flächendeckung des Druckbildes auf dem Bedruckstoff reduziert wird.

10. Verfahren gemäß Anspruch 9, wobei zum Bestimmen der Normal-Tintenmenge Tonwerte für unterschiedliche Bereiche des der Normal-Qualität entsprechenden Druckbildes definiert werden, und wobei die geometrische Flächendeckung reduziert wird durch Definieren einer Übertragungsfunktion oder Gradationskurve, so dass wenigstens ein Teil von Ausgangswerten der Übertragungsfunktion oder Gradationskurve kleiner als jeweils zugehörige Eingangswerte der Übertragungsfunktion oder Gradationskurve sind, und Verändern der definierten Tonwerte des Druckbildes, indem die Tonwerte als Eingangswerte für die Übertragungsfunktion oder Gradationskurve verwendet werden und die Ausgangswerte der Übertragungsfunktion oder Gradationskurve als neue Tonwerte für das Druckbild definiert werden.

11. Verfahren gemäß Anspruch 10, wobei die Übertragungsfunktion oder Gradationskurve derart definiert wird, dass Tonwerte des Druckbildes im hellen Bereich unverändert bleiben und Tonwerte des Druckbildes nahe einem Vollton reduziert werden.

12. Verfahren gemäß Anspruch 9, wobei zum Bestimmen der Normal-Tintenmenge ein Rasterbild (2) für das Druckbild gebildet wird, und wobei die geometrische Flächendeckung reduziert wird durch Ausbilden einer Bit- oder Pixel-orientierten Maske (3), deren Rasterstruktur quantitativ gegenüber jener des Rasterbildes (2) reduziert ist, und Abbilden des Rasterbildes (2) durch die Bit- oder Pixel-orientierten Maske (2) hindurch, so dass ein reduziertes Rasterbild (2') gebildet wird.

13. Verfahren gemäß Anspruch 12, wobei die Rasterstruktur der Bit- oder Pixel-orientierten Maske (3) derart ausgebildet wird, dass sie quantitativ gegenüber jener des Rasterbildes (2) um 50% reduziert ist.

14. Verfahren gemäß Anspruch 9, wobei zum Bestimmen der Normal-Tintenmenge ein Rasterbild (4) des Druckbildes definiert wird, und wobei die geometrische Flächendeckung reduziert wird, indem in zusammenhängenden Flächen des Rasterbildes (4) eine bestimmte Anzahl von Bildpunkten entfernt werden, so dass ein reduziertes Rasterbild (4') gebildet wird.

15. Verfahren gemäß Anspruch 14, wobei zum Tintenstrahldrucken von Texten bei dafür vorgesehenen Zeichensätzen eine bestimmte Anzahl von Bildpunkten entfernt werden, so dass jeweilige Konturen der Zeichen beibehalten werden.

16. Verfahren gemäß Anspruch 2, wobei das Reduzieren der Normal-Tintenmenge auf die reduzierte Tintenmenge durchgeführt wird, indem der Grauwert des Druckbildes reduziert wird.

17. Verfahren gemäß Anspruch 16, wobei zum Tintenstrahldrucken von Texten Zeichensätze mit einem Grauwert, der kleiner als 100% ist, definiert werden.

## Claims

1. Method for reducing a strikethrough effect when inkjet-printing on thin printing materials, in particular newsprint, comprising:

   determination of a normal print quality,
   determination of a normal quantity of ink which would be used for inkjet-printing a certain print image on strikethrough-resistant printing material, based on the normal print quality,
   determination of a minimum print quality for the print image that is to be printed,
   determination of a maximum value for the strikethrough effect,
   reduction of the normal quantity of ink to a reduced quantity of ink so that the print image has at least the minimum print quality and the maximum value of the strikethrough effect is not exceeded.

2. Method according to claim 1, wherein the normal quantity of ink is defined by a print-drop volume ($V_{drop}$), a geometrical area coverage of the print image on the printing material and a greyscale value of the print image, and wherein the reduction of the normal quantity of ink to the reduced quantity of ink is carried out by reducing at least one of: the print-drop volume ($V_{drop}$), the geometrical area coverage and the greyscale value.

3. Method according to claim 2, wherein in order to determine the normal quantity of ink, a first print-drop volume ($V_{drop1}$) is determined that corresponds to the normal quality, and wherein the reduction of the normal quantity of ink to the reduced quantity of ink is carried out by reducing the first print-drop volume

$(V_{drop1})$ to a lower second print-drop volume $(V_{rop2})$.

**4.** Method according to claim 3, wherein the first print-drop volume $(V_{drop1})$ is reduced by 50% to 75%.

**5.** Method according to claim 3 or 4, wherein the first print-drop volume $(V_{drop1})$ is determined with less than 100pl.

**6.** Method according to claim 3 or 4, wherein the first print-drop volume $(V_{drop1})$ is determined with approximately 100pl, and the second print-drop volume $(V_{drop2})$ is fixed at approximately 50pl to approximately 25pl.

**7.** Method according to one of claims 3 to 6, wherein a print resolution $(Res_1)$ that corresponds to the normal print quality is fixed at approximately 300dpi for the print image.

**8.** Method according to one of claims 3 to 6, wherein a print resolution $(Res_1)$ that corresponds to the normal print quality is fixed at more than 300dpi for the print image.

**9.** Method according to claim 2, wherein the reduction of the normal quantity of ink to the reduced quantity of ink is carried out by reducing the geometrical area coverage of the print image on the printing material.

**10.** Method according to claim 9, wherein in order to determine the normal quantity of ink, tone values are defined for different regions of the print image that corresponds to the normal quality, and wherein the geometrical area coverage is reduced by defining a transfer function or gradation curve so that at least a portion of the output values of the transfer function or gradation curve are smaller than respectively associated input values of the transfer function or gradation curve, and changing the defined tone values of the print image by using the tone values as input values for the transfer function or gradation curve and defining the output values of the transfer function or gradation curve as new tone values for the print image.

**11.** Method according to claim 10, wherein the transfer function or gradation curve is defined in such a way that tone values of the print image in the light region remain unchanged, and tone values of the print image close to a full tone are reduced.

**12.** Method according to claim 9, wherein in order to determine the normal quantity of ink, a raster image (2) is formed for the print image, and wherein the geometrical area coverage is reduced by forming a bit- or pixel-oriented mask (3), the raster structure of which is reduced quantitatively with respect to that of the raster image (2), and mapping the raster image (2) through the bit- or pixel-oriented mask (2) so that a reduced raster image (2') is formed.

**13.** Method according to claim 12, wherein the raster structure of the bit- or pixel-oriented mask (3) is formed in such a way that it is reduced quantitatively by 50% with respect to that of the raster image (2).

**14.** Method according to claim 9, wherein in order to determine the normal quantity of ink, a raster image (4) of the print image is defined, and wherein the geometrical area coverage is reduced by removing a certain number of image points in contiguous areas of the raster image (4) so that a reduced raster image (4') is formed.

**15.** Method according to claim 14, wherein in order to inkjet-print texts with character sets provided therefor, a certain number of image points are removed so that respective contours of the characters are retained.

**16.** Method according to claim 2, wherein the reduction of the normal quantity of ink to the reduced quantity of ink is carried out by reducing the greyscale value of the print image.

**17.** Method according to claim 16, wherein in order to inkjet-print texts, character sets with a greyscale value that is smaller than 100% are defined.

**Revendications**

**1.** Procédé pour réduire l'effet d'impacts traversants de l'impression par jet d'encre sur des matériaux d'impression minces, notamment du papier journal, comprenant les étapes suivantes :

- déterminer une qualité d'impression normale,
- déterminer une quantité d'encre normale en se fondant sur la qualité d'impression normale et que l'on utiliserait pour imprimer par jet d'encre une certaine image d'impression sur du matériau d'impression résistant à l'impact,
- déterminer une qualité d'impression minimale pour l'image à imprimer,
- déterminer une valeur maximale de l'effet d'impact,
- réduire la quantité normale d'encre à une quantité réduite de façon que l'image d'impression offre au moins la qualité d'impression minimale, et ne dépasse pas la valeur maximale de l'effet d'impact.

**2.** Procédé selon la revendication 1,
**caractérisé en ce qu'**

- on définit la quantité d'encre normale par un volume de gouttelettes d'encre d'impression ($V_{drop}$), la couverture de la surface géométrique de l'image d'impression sur le matériau d'impression et une valeur de gris de l'image d'impression, et

- on réduit la quantité normale d'encre à la quantité réduite d'encre en réduisant au moins le volume de gouttes d'encre d'impression ($V_{drop}$), la couverture de la surface géométrique et la valeur de gris.

3. Procédé selon la revendication 2, **caractérisé en ce que**

- pour déterminer la quantité normale d'encre, on détermine un volume de gouttes d'impression ($V_{drop1}$) correspondant à la qualité normale, et

*on réduit la quantité d'encre normale à la quantité d'encre réduite en réduisant le premier volume de gouttes d'impression ($V_{drop1}$) à un second volume de gouttes d'impression ($V_{drop2}$), plus faible.

4. Procédé selon la revendication 3, **caractérisé en ce qu'**
on réduit le premier volume de gouttes d'impression ($V_{drop1}$) de 50 % à 75%.

5. Procédé selon la revendication 3 ou 4, **caractérisé en ce qu'**
on détermine le premier volume de gouttes d'impression ($V_{drop1}$), comme inférieur à 100pL.

6. Procédé selon la revendication 3 ou 4, **caractérisé en ce qu'**
on détermine le premier volume de gouttes d'impression ($V_{drop1}$) pour environ 100pL et le selon volume de gouttes d'impression ($V_{drop2}$) sur environ 50pL jusqu'à 25pL.

7. Procédé selon l'une des revendications 3 à 6, **caractérisé en ce qu'**
on fixe une résolution d'impression ($Res_1$) à environ 300dpi correspondant à la qualité d'impression normale pour l'image d'impression.

8. Procédé selon l'une des revendications 3 à 6, **caractérisé en ce qu'**
on fixe une résolution d'impression ($Res_1$) à plus de 300dpi correspondant à la qualité d'impression normale pour l'image d'impression.

9. Procédé selon la revendication 2, **caractérisé en ce qu'**
on réduit la quantité d'encre normale à la quantité d'encre réduite en réduisant la couverture de la surface géométrique de l'image d'impression sur le matériau imprimé.

10. Procédé selon la revendication 8, **caractérisé en ce que**

- pour déterminer la quantité normale d'encre, on définit des valeurs de teinte pour différentes plages de l'image d'impression correspondant à la qualité normale, et

* on réduit la couverture de la surface géométrique en définissant une fonction de transfert ou une courbe de gradation, de façon qu'au moins une partie des valeurs initiales de la fonction de transfert ou de la courbe de gradation soit inférieure aux valeurs d'entrée respectivement correspondantes de la fonction de transfert ou de la courbe de gradation, et

- on modifie les valeurs de teinte définies de l'image d'impression en utilisant les valeurs de teinte comme valeurs d'entrée de la fonction de transfert ou de la courbe de gradation, et on définit les valeurs de sortie de la fonction de transfert ou de la courbe de gradation, comme nouvelles valeurs de teinte pour l'image d'impression.

11. Procédé selon la revendication 10, **caractérisé en ce qu'**
on définit la fonction de transfert ou la courbe de gradation de façon que les valeurs de teinte de l'image d'impression dans la zone claire, restent inchangées et que les valeurs de teinte de l'image d'impression proches de la couleur pure, soient réduites.

12. Procédé selon la revendication 9, **caractérisé en ce que**
pour déterminer la quantité d'encre normale on forme une image tramée (2) de l'image d'impression, et
* on réduit la couverture de la surface géométrique en développant un masque (3) dans le sens pixel ou dans le sens bit, dont la structure de la trame est réduite quantitativement par rapport à celle de l'image tramée (2), et
* on forme l'image tramée (2) avec le masque dans le sens pixel ou bit (2) de façon à obtenir une image tramée réduite (2').

13. Procédé selon la revendication 12, **caractérisé en ce qu'**
on exploite la structure tramée dans le sens pixel ou bit (3) de façon à ce qu'elle soit réduite quantitativement de 50 % par rapport à celle de l'image tramée (2).

14. Procédé selon la revendication 9, **caractérisé en ce que**
pour déterminer la quantité d'encre normale, on définit une image tramée (4) de l'image d'impression, et
* on réduit la couverture de la surface géométrique en éliminant un certain nombre de points images des surfaces liées de l'image tramée (4) pour obtenir une image tramée réduite (4').

**15.** Procédé selon la revendication 14,
**caractérisé en ce que**
pour l'impression par jet d'encre de texte, pour des polices de signes prévues à cet effet, on élimine un certain nombre de points images de façon à conserver le contour respectif des signes.

**16.** Procédé selon la revendication 12,
**caractérisé en ce qu'**
on réduit la quantité d'encre normale à la quantité d'encre réduite, en réduisant la valeur de gris de l'image d'impression.

**17.** Procédé selon la revendication 16,
**caractérisé en ce que**
pour l'impression par jet d'encre de texte, on définit des polices de signes avec une valeur de gris inférieure à 100 %.

$Res_1$ — $V_{drop1}, d_{drop1}$

1

$Res_1$ — $V_{drop2}, d_{drop2}$

1'

Res. gleich
$V_{drop}$ kleiner

$d_{dot1}$

$d_{dot2}$

Tropfen erscheinen
auf der Rückseite
"Show Through"

Substrat im Querschnitt
Zeitungspapier

**Figur 1A**

$Res_2$ — $V_{drop2}, d_{drop2}$

1'

Res. höher
$V_{drop}$ kleiner

$d_{dot2}$

**Figur 1B**

Figur 2

Figur 3

Figur 4

Figur 5

Figur 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1168822 A